# EUROPÄISCHE PATENTSCHRIFT

(11) **EP 0 476 271 B1**
(45) Veröffentlichungstag und Bekanntmachung des Hinweises auf die Patenterteilung: **29.03.1995**
(21) Anmeldenummer: 91112574.8
(22) Anmeldetag: 26.07.1991
(51) Int. Cl.: F41H 7/02, B60K 11/08

(54) **Gräting**
Grating
Volet de protection

(30) Priorität: 05.09.1990 DE 4028124
(43) Veröffentlichungstag der Anmeldung: 25.03.1992
(73) Patentinhaber: Fried. Krupp AG Hoesch-Krupp, 45143 Essen (DE)
(72) Erfinder: Dieterich, Günter, W-4600 Dortmund 41 (DE); Piel, Karlheinz, Dipl.-Ing., W-5840 Schwerte (DE); Reinehr, Paul-Werner, W-5860 Iserlohn-Rheinen (DE); Schulte, Hans-Werner, W-5840 Schwerte 3 (DE)

(56) Entgegenhaltungen:
- DE-A- 3 703 716
- DE-C- 958 721
- US-A- 1 941 797
- US-A- 2 008 907
- US-A- 3 765 299

## Beschreibung

Die Erfindung betrifft eine Gräting nach dem Oberbegriff des Patentanspruches.

Sonderfahrzeuge, die im sogenannten off-road-Betrieb eingesetzt sind, haben den Motorenraum einschließlich Kühlsystem des öfteren abgekapselt, um so einen Ausfall des Fahrzeuges durch Beschädigung dieser Teile des Antriebsystems durch Eindringen von Fremdkörpern zu vermeiden. Die Versorgung des Motors mit Verbrennungsluft und mit Kühlluft wird dabei üblicherweise über Grätings sichergestellt. Im üblichen haben diese Motorenräume zur Be- und Entlüftung zwei dieser Grätings, wobei im Bereich der Einlaßgrätings ein Ventilator die benötigten Luftmengen ansaugt und im Bereich der Auslaßgrätings ein freies Ausströmen der verbrauchten Luft möglich ist.

Die Anforderungen, die somit an entsprechende Grätings gestellt werden, sind eine hinreichend große Öffnung des Gesamtsystems für den erforderlichen Luftdurchsatz und die Ausbildung der Luftkanäle dergestalt, daß ein Eindringen von Fremdkörpern verhindert werden kann.

Bei den z.B. aus der DE-OS 37 03 716 bekannten Grätings nach dem Oberbegriff des Patentanspruches sind die parallel zueinander angeordneten Profilleisten üblicherweise in einem Rahmen angeordnet, wobei die einzelnen Profilleisten mit ihren Stirnseiten auf den den Stirnseiten zugeordneten Rahmenteilen angeschweißt sind. Diese Schweißbereiche liegen somit im Auftreffbereich und Bereich der Schlagwirkung von Fremdkörpern.

Die aber durch das Schweißen entstehende Wärmeeinflußzone, führt in diesen Verbindungsbereichen Profilleisten/Rahmenteile zu einer Verschlechterung des ballistischen Schutzes gegenüber dem Grundmaterial. Außerdem ist darüber hinaus bei dieser Art der Verbindung eine komplette Schweißverbindung der Rahmenteile mit den Profilleisten nicht möglich.

Aus der US-PS 39 70 439, Spalte 3, 2. Absatz, ist es bei Luftstaubabscheidern für Motoren oder Maschinen u.a. bekannt, die Enden der parallel in einem Rahmen zueinander untergebrachten Lamellen in in den Seitenwänden angeordneten Rinnen oder Nuten zu haltern.

Ferner offenbart die US-A-1941797 einen Kühlergrill für Automobile, wobei die Kühlergrillstäbe in in den Rahmenteilen angeordnete Löcher eingreifen, die zur Verbesserung der Verbindung der Randeinfassung mit den Querstäben dienen.

Die US-A-3765299 zeigt die spezielle Ausbildung einer sog. Schottpanzerung für militärische Fahrzeuge, wobei innerhalb des Schottes zur Erhöhung der Beschußsicherheit zusätzlich Materialien angeordnet sind, die einfache rechteckige Konturen aufweisen und in Schlitzen in Verbindungsstücken eingestellt sind.

Von daher liegt der Erfindung die Aufgabe zugrunde, eine Verbindung von Rahmenteilen mit den Profilleisten in Grätings der eingangs genannten Art zu schaffen, die eine Verbesserung der gegenüber dem Grundmaterial geringeren Auftreff- bzw. Schlagsicherheit dieser Bereiche gewährleistet ist. Nach der Erfindung wird die Aufgabe durch die im kennzeichnenden Teil des Anspruchs angegebenen Merkmale gelöst.

Die Vorteile der erfindungsgemäßen Verbindung sind insbesondere darin zu sehen, daß auf Schweißverbindungen in den Bereichen der Auftreff- bzw. Schlagwirkung von Fremdkörpern zwischen den Rahmenteilen und den Profilleisten verzichtet werden kann, wodurch der volle ballistische Schutz des Grundmaterials durch Vermeidung von Wärmeeinflußzonen in diesen Bereich erhalten bleibt.

Außerdem wird der Zusammenbau der Grätings verbessert, insbesondere bei Verwendung von Profilleisten aus Verbundwerkstoffen und Längen- und Dickentoleranzen der Profilleisten können auf einfache Weise durch die Löcher in den Rahmenteilen aufgefangen werden. Zudem können bei lösbaren Verbindungen einzelne beschädigte Profilleisten schnell ausgetauscht werden. Anhand der schematischen Zeichnung sind Ausführungsbeispiele der Verbindung nach der Erfindung im folgenden näher beschrieben.
Es zeigt
- Fig. 1: ein Rahmenteil in Seitenansicht,
- Fig. 2: eine Ausführungsform einer Gräting in Teilansicht.

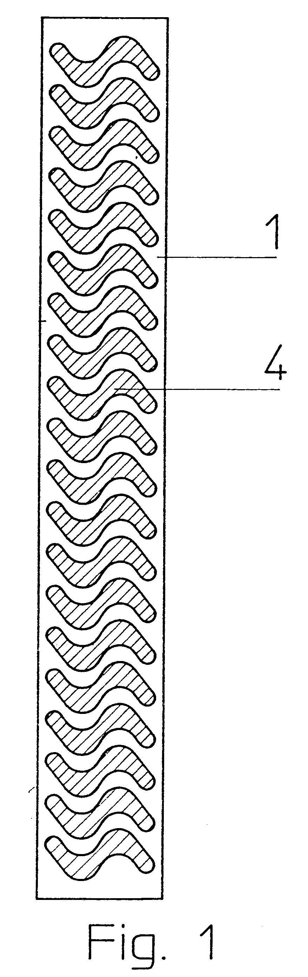

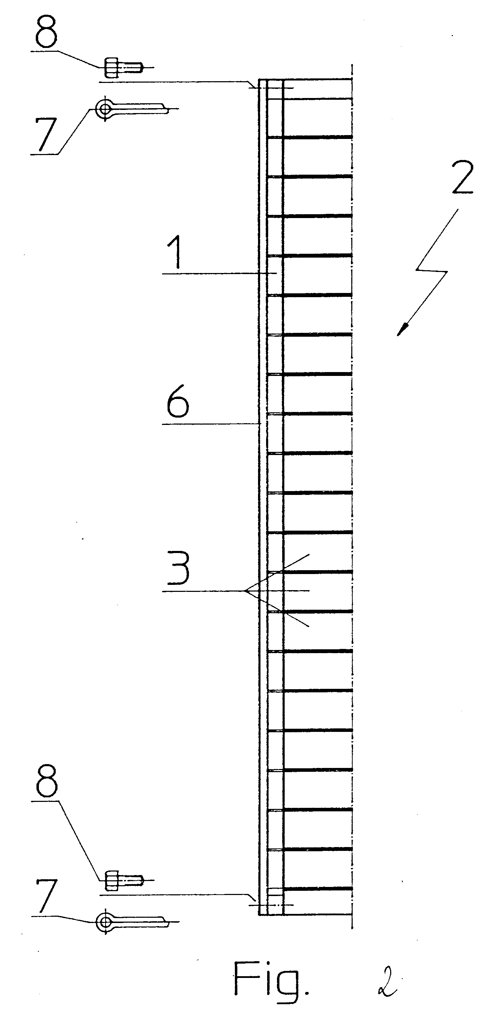

Wie aus den Fig. 1 und 2 hervorgeht, weisen die seitlichen Rahmenteile 1 einer Gräting 2 den Profilleisten 3 konturgerechte Löcher 4, die in Fig. 1 in dem einzelnen Rahmenteil 1 dargestellt sind, auf. Diese Löcher 4 können je nach Werkstofftyp des Rahmenteils 1 durch Laserschneiden, Plasmaschneiden, Brennschneiden, Fräsen und/oder Bohren, Stanzen oder durch sonstige mechanische Bearbeitung in das Rahmenteil 1 nachträglich eingebracht werden.

Auch ist es möglich, bei Verwendung von Guß- oder gesinterten Rahmenteilen 1 die Löcher 4 bereits beim Guß/Sintern vorzusehen. Die endgültige Form kann hierbei mit oder ohne anschließende Bearbeitung erreicht werden.

Die Gestaltung der Löcher 4 kann so erfolgen, daß Dickentoleranzen der Profilleisten 3 aufgefangen werden können. Das Auffangen der Längentoleranzen ergibt sich durch die Einlage in die Löcher 4 in den Rahmenteilen 1.

Zur Gewährleistung gesicherter Abstände der Profilleisten 3 bei der Verbindung der Rahmenteile 1 mit den Profilleisten 3 können Abstandshalter verwendet werden, was nicht dargestellt ist.

In der Fig. 2 ist ein Teil eines Ausführungsbeispiels einer Gräting 2 dargestellt, bei der die in die Löcher 4 in die Rahmenteile 1 eingelegten Profilleisten 3 mit diesen lösbar verbunden sein können. Bei dieser lösbaren Verbindung sind zur Vermeidung von Bewegungen der Profilleisten 3 in den Rahmenteilen 1 die Rahmenteile 1 mit den eingelegten Profilleisten 3 jeweils mit einer den Rahmenteilen 1 angepaßten zusätzlichen Sicherungsplatte 6 auf den Rückseiten lösbar verbunden.

Die Sicherungsplatte 6 verhindert durch Klemmwirkung die Bewegung der Profilleisten 3 in den Rahmenteilen 1. Die Sicherungsplatte ist hierbei den Rahmenteilen 1 angepaßt.

Die Verbindung von Sicherungsplatten 6 und Rahmenteilen 1 kann erfolgen als Steckverbindung mit und ohne Versplintung 7, Schraubverbindung 8 oder sonstige mechanische lösbare Verbindung, die nicht dargestellt ist.

## Patentansprüche

1. Gräting mit parallel so zueinander in einem Rahmen den Zwischenraum zwischen sich überdeckend angeordneten Profilleisten, daß sie keinen Durchgang für Geschosse bieten, dadurch gekennzeichnet, daß die Enden der Profilleisten (3) jeweils in den Profilleisten (3) konturgerechten Löchern (4) in den seitlichen Rahmenteilen (1) angeordnet sind und mit den Rahmenteilen (1) durch an diesen mittels Verbindungselementen befestigten Sicherungsplatten (6) lösbar verbunden sind.

## Claims

1. Grating having profile strips disposed overlapping the intermediate spaces and parallel with each other in a frame in such a manner as to prevent the through-passage of projectiles of a fire arm, characterised in that the ends of the profile strips (3) are disposed in each case in holes (4), which have a contour corresponding to that of the profile strips (3), in the lateral frame parts (1) and are releasably connected to the frame parts (1) by virtue of securing plates (6) attached to the said frame parts by means of connecting members.

## Revendications

1. Volet de protection comprenant des languettes profilées disposées parallèlement les unes aux autres dans un cadre, en recouvrant l'espace qui les sépare, de façon à n'offrir aucun passage pour des projectiles, caractérisé en ce que les extrémités des languettes profilées (3) sont chacune disposées dans des logements (4) de contour approprié pour les languettes profilées, dans les parties latérales (1) du cadre, et sont reliées de manière amovible aux parties (1) du cadre par l'intermédiaire de plaques de fixation (6) fixées sur ces dernières par des éléments de liaison.
